# EUROPÄISCHE PATENTSCHRIFT

(11) **EP 0 589 153 B1**
(45) Veröffentlichungstag und Bekanntmachung des Hinweises auf die Patenterteilung: **18.09.1996**
(21) Anmeldenummer: 93110231.3
(22) Anmeldetag: 26.06.1993
(51) Int. Cl.: F02M 31/06

(54) **Vorrichtung zur Regelung der Temperatur der Ansaugluft von Brennkraftmaschinen**
Temperature control device for the intake air of internal combustion engines
Dispositif pour régler la température de l'air d'aspiration de moteurs à combustion interne

(30) Priorität: 22.09.1992 DE 9212739 U
(43) Veröffentlichungstag der Anmeldung: 30.03.1994
(73) Patentinhaber: FILTERWERK MANN & HUMMEL GMBH, D-71631 Ludwigsburg (DE)
(72) Erfinder: Andress, Heinz, D-7141 Erdmannhausen (DE); Klotz, Arthur, D-7148 Remseck 5 (DE); Müller, Heinz, D-7148 Remseck 3 (DE); Seidl, Herbert, D-7144 Asperg (DE)
(74) Vertreter: Voth, Gerhard, Dipl.-Ing.

(56) Entgegenhaltungen:
- DE-A- 2 624 210
- FR-A- 2 453 982
- GB-A- 2 001 387
- GB-A- 2 084 250

## Beschreibung

Die Erfindung betrifft eine Vorrichtung zur Regelung der Temperatur der Ansaugluft einer Brennkraftmaschine nach dem Oberbegriff des Hauptanspruchs.

Aus der DE-PS 26 24 210 ist eine Vorrichtung der genannten Art bekannt. Diese Vorrichtung dient dazu, die Temperatur der Ansaugluft innerhalb eines bestimmten Bereiches zu halten und besteht aus einem pneumatischen Stellglied, welches über einen Temperatursensor in Form eines Bimetallelements gesteuert wird.

Bei geöffneter Hauptdrosselklappe, also bei Vollastbetriebszuständen, soll eine Brennkraftmaschine kältere Luft ansaugen, damit ein besserer Füllungsgrad und eine höhere Leistung erreicht werden kann. Allerdings besteht dabei der Nachteil, daß bei Vollast - ohne Berücksichtigung der vorherrschenden Temperaturen - ausschließlich Kaltluft angesaugt wird. Insbesondere bei einer Temperatur, die wenig über dem Gefrierpunkt liegt, kann der Ansaugtrakt vereisen, wodurch eine erhebliche Leistungsminderung der Brennkraftmaschine entsteht. Um dieses zu verhindern, ist ein der Kaltluft ausgesetzter Thermostat vorgesehen, der den Schwenkbereich der Steuerklappe in der den Warmluftkanal abschließenden Richtung festlegt. Dies bedeutet, daß auch bei Vollast, insbesondere im kritischen Temperaturbereich, die Kaltluft zumindest mit einer geringen Menge Warmluft gemischt wird.

Ein Nachteil der Vorrichtung besteht darin, daß der Thermostat in aufwendiger Weise justiert werden muß, um eine optimale Regelkennlinie zu erzielen.

Der Erfindung liegt daher die Aufgabe zugrunde, eine Vorrichtung zur Regelung der Temperatur der Ansaugluft von Brennkraftmaschinen zu schaffen, bei der die Justage des Thermostats einfach und zuverlässig vorgenommen werden kann.

Diese Aufgabe wird ausgehend von dem Oberbegriff des Hauptanspruchs durch dessen kennzeichnende Merkmale gelöst.

Aufgrund des Verschweißens der Aufnahmevorrichtung wird die Herstellung des sog. Regelkastens, der die Vorrichtung zur Regelung der Temperatur der Ansaugluft enthält, wesentlich vereinfacht. Dieser Regelkasten kann als einfaches Spritzgußteil gestaltet werden, wobei die aufwendige Haltevorrichtung für den Thermostat entfällt und lediglich geeignete Schweißflächen vorzusehen sind. Entscheidend ist, daß der Thermostat mit der Aufnahmevorrichtung nach dem Fertigen des Spritzgießteils in dasselbe eingebracht wird.

Ein weiterer Vorteil der Erfindung liegt darin, daß der gesamte nachträgliche Justieraufwand entfällt. Außerdem entfallen geeignete Justierhilfsmittel wie Schrauben, Gleitflächen oder Schiebelager. Somit können erhebliche Montagekosten und auch Herstellungskosten eingespart werden.

Eine Schweißvorrichtung, die geeignet ist, die Justierarbeiten in den Schweißvorgang zu integrieren, ist relativ einfach aufgebaut. Hierzu ist lediglich ein längs verschieblicher Schweißhalter vorzusehen, der die Aufnahmevorrichtung mit dem Thermostaten in die definierte Lage bringen kann.

Ein weiterer Vorteil der Erfindung ist darin zu sehen, daß nach Art eines Baukastensystems der Regelkasten mit unterschiedlichen Thermostaten bestückt werden kann, je nachdem, für welche Brennkraftmaschine dieser zur Anwendung kommt.

Gemäß einer vorteilhaften Ausgestaltung der Erfindung wird die Aufnahmevorrichtung mittels Ultraschallschweißen oder Reibschweißen in dem Kaltluftrohr befestigt. Gerade dieses Schweißverfahren hat sich bei Kunststoffteilen, die an der Peripherie einer Brennkraftmaschine angeordnet sind, bewährt.

Eine weitere Ausgestaltung der Erfindung zeichnet sich dadurch aus, daß der Thermostat entlang der Strömungsrichtung der angesaugten Luft angeordnet ist. Damit ist gewährleistet, daß die anströmende Luft die gesamte Oberfläche des Thermostaten überstreicht und eine optimale Wirkung des Thermostaten erzielt wird.

Diese und weitere Merkmale von bevorzugten Weiterbildungen der Erfindung gehen außer aus den Ansprüchen auch aus der Beschreibung und den Zeichnungen hervor.

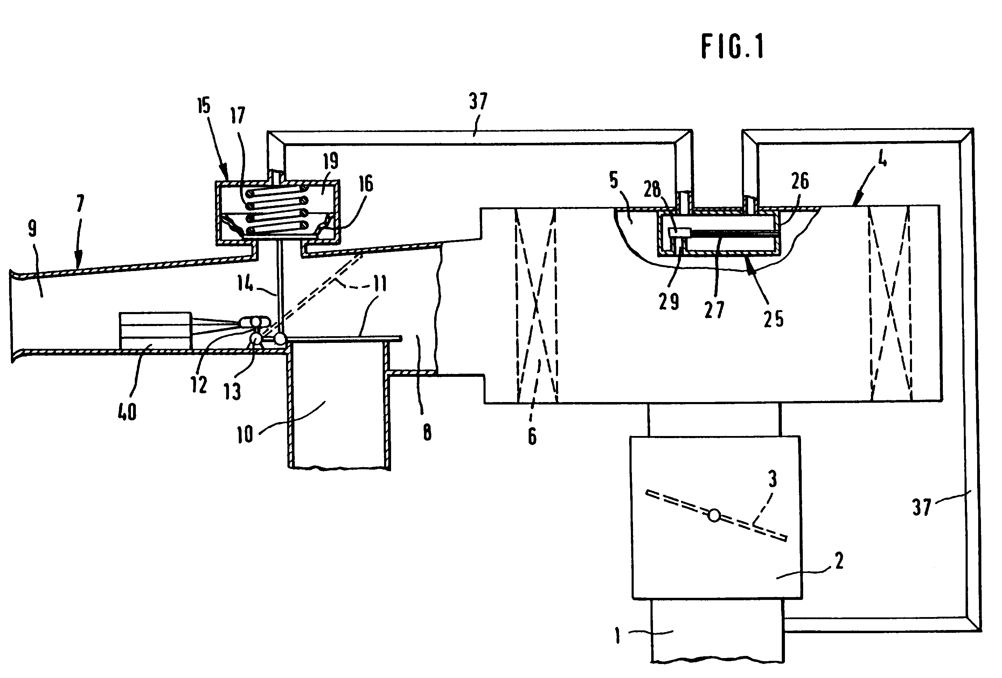

Die Erfindung wird nachfolgend anhand eines Ausführungsbeispiels näher erläutert. Es zeigt
- Figur 1: einen an den Ansaugkanal einer Brennkraftmaschine angeschlossenen Ansaugluftfilter mit einer Regelvorrichtung,
- Figur 2: eine Detaildarstellung des Thermostaten in einem Längsschnitt,
- Figur 3: den Thermostat von dem Kaltlufteintritt aus gesehen.

Eine nicht dargestellte Brennkraftmaschine hat einen Ansaugkanal 1, der einen Vergaser 2 mit einer willkürlich betätigbaren Hauptdrosselklappe 3 trägt. Auf den Vergaser 2 ist ein Ansaugluftfilter 4 mit einem ringförmigen, radial von außen nach innen durchströmten, einen Reinluftraum 5 umschließenden Filtereinsatz 6 und einem Ansaugrohr 7 aufgesetzt. Das Ansaugrohr 7 weist einen Rohluftstutzen 8 auf, in den ein Kaltluftkanal 9 und ein Warmluftkanal 10 einmünden. Die Warmluft wird durch eine nicht dargestellte Warmluftleitung von der Nähe des Auspuffrohres der Brennkraftmaschine her dem Warmluftkanal 10 zugeführt.

Bei dem Ausführungsbeispiel greift die Antriebsstange 14 eines pneumatischen Stellmotors 15 an einer in dem Rohluftstutzen 8 schwenkbar angeordneten Steuerklappe 11 mit Anschlaghebel 12 und Schwenkachse 13 an. Der Stellmotor 15 enthält eine Gummimembran 16 und eine einen Steuerdruckraum 19 durchsetzende Rückstellfeder 17 und ist über eine Steuerdruckleitung 37 stromabwärts der Hauptdrosselklappe 3 des Vergasers 2 an den Ansaugkanal 1 der Brennkraftmaschine angeschlossen. Die Steuerklappe 11 ist durch den pneumatischen Stellmotor 15 gegen die Kraft der Rückstellfeder 17 aus ihrer ausgezogen gezeigten Endstellung, in der sie den Warmluftkanal 10 abschließt und gleichzeitig den Kaltluftkanal 9 öffnet, in ihre andere, gestrichelt dargestellte Endstellung schwenkbar, in der sie den Kaltluftkanal 9 abschließt und den Warmluftkanal 10 öffnet.

Die Steuerdruckleitung 37 enthält ein als temperaturabhängig betätigtes Ventil 25 ausgebildetes Belüftungsventil. Im Ventilgehäuse 26 ist ein Bimetallelement 27 einseitig festgelegt, das an seinem freien Ende einen Ventilkörper 28 trägt. Der Ventilkörper 28 steuert bei Erreichen der Solltemperatur eine Verbindung 29 zum Reinluftraum 5 des Ansaugluftfilters 4 auf. Die Übertragung der Temperatur vom Reinluftraum 5 auf das Bimetallelement 27 erfolgt durch eine nicht dargestellte, im Verhältnis zur Verbindung 29 kleine Öffnung, die in bekannter Weise einen die Druckverhältnisse nur unwesentlich beeinflussenden Luftstrom vom Reinluftraum 5 in das Innere des Ventilgehäuses 26 zuläßt.

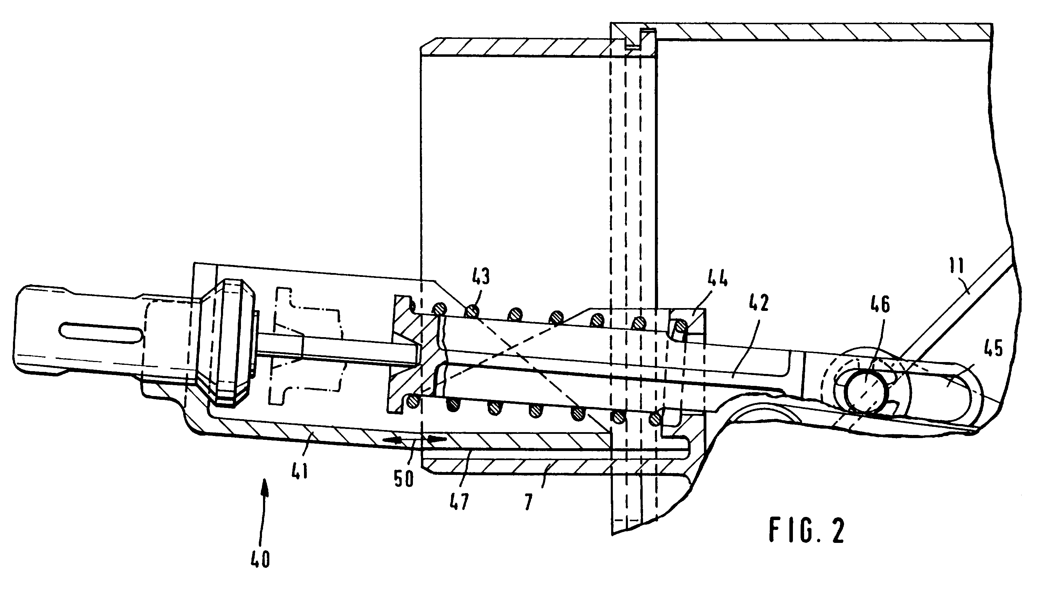

Im Kaltluftkanal 9 ist ein als Wachsthermostat ausgebildeter Thermostat 40 quer zur Schwenkachse 13 und im wesentlichen längs der Strömungsrichtung der angesaugten Luft angeordnet. Der Thermostat 40 hat nach Figur 2 ein Gehäuse 41 und einen Antriebsstift 42. Er stützt sich einerseits in dem Gehäuse 41 ab und andererseits über eine Druckfeder 43, die an einer Anlagestelle 44 des Ansaugrohrs 7 anliegt. An dem Antriebsstift 42 des Thermostats 40 befindet sich eine Längsbohrung 45. In dieser Längsbohrung 45 ist ein Zapfen 46 der Steuerklappe 11 beweglich angeordnet.

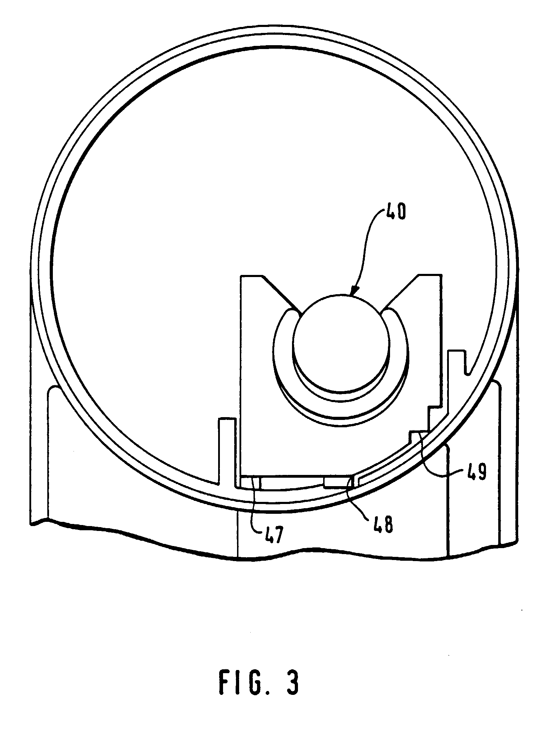

Das Gehäuse 41 des Thermostaten 40 ist an der Auflagefläche 47 mit dem Ansaugrohr 7 verschweißt. In Figur 3 ist die Auflagefläche 47 sowie weitere Auflageflächen 48, 49 deutlich sichtbar. Auf dem Ansaugrohr 7 kann der Thermostat vor dem Verschweißen in der Richtung des Pfeils 50 verschoben werden, um die exakte Lage des Thermostaten in Bezug auf die Steuerklappe 11 zu definieren.

Die Funktion des gesamten Systems wird nachfolgend dargestellt.

Während des Betriebs der Brennkraftmaschine herrscht in dem ganzen Ansaugsystem ein Unterdruck, der im Ansaugkanal 1 am größten ist und zum Kaltluftkanal 9 hin abnimmt. Der große Unterdruck des Ansaugkanals 1 wird durch die Steuerdruckleitung 37 in den Steuerdruckraum 19 des pneumatischen Stellmotors 15 oberhalb der Gummimembran 16 übertragen. Dort übt er entsprechend den auf beiden Seiten der Gummimembran herrschenden Unterdrücken und entsprechend der Membranfläche eine Kraft zum Verstellen der Steuerklappe 11 aus. Einen wesentlichen Einfluß auf die Druckverhältnisse in der Steuerdruckleitung 37 hat außerdem die Luft, die durch die Verbindung 29 in das Thermostatventil 25 und somit in die Steuerdruckleitung 37 gelangen kann, wenn das Bimetallelement 27 sich oberhalb einer vorbestimmten Temperatur nach oben weggebogen und der Ventilkörper 28 die Verbindung 29 geöffnet hat.

Bei geschlossener Hauptdrosselklappe, beispielsweise im Leerlaufbetrieb, ist der Unterdruck im Ansaugkanal 1 besonders groß. Wenn dann bei entsprechend niedriger Temperatur der angesaugten Luft die Verbindung 29 geschlossen ist, vermag der im pneumatischen Stellmotor 15 oberhalb der Gummimembran 16 auftretende große Unterdruck die Steuerklappe 11 gegen die Kraft der Rückstellfeder 17 in die gestrichelt gezeichnete Stellung zu schwenken, bei der sie den Kaltluftkanal 9 verschließt und den Warmluftkanal 10 geöffnet hat.

Überschreitet die Temperatur der Luft, die durch den Warmluftkanal 10 in den Rohluftstutzen 8 eintritt und nach Durchqueren des Filtereinsatzes 6 in den Reinluftraum 5 gelangt und damit das Thermostatventil 25 beeinflußt, einen vorbestimmten Wert, so beginnt sich das Bimetall 27 nach oben zu krümmen. Der Ventilkörper 28 gibt die Verbindung 29 zum Reinluftraum 5 frei, und es kann zusätzlich Reinluft in die Steuerdruckleitung 37 eindringen und dort den Unterdruck abbauen. Als Folge davon schwenkt die Steuerklappe 11 von ihrer den Kaltluftkanal 9 verschließenden Endstellung so weit weg, bis die Mischluft die Temperatur hat, bei der sich ein Gleichgewichtszustand zwischen der Kraft der Rückstellfeder 17 einerseits und den an der Gummimembran 16 des pneumatischen Stellmotors 15 sowie an der Steuerklappe 11 auftretenden Kräften andererseits einstellt.

Mit zunehmenden Öffnen der Hauptdrosselklappe 3 des Vergasers 2 verringert sich der Unterdruck in dem Ansaugkanal 1. Bei vollständig geöffneter Hauptdrosselklappe 3 ist der Unterdruck im Ansaugkanal 1 und damit im Steuerdruckraum 19 des pneumatischen Stellmotors 15 so gering, daß er nicht mehr ausreicht, um die Kraft der Rückstellfeder 17 zu überwinden. Oberhalb einer vorbestimmten Temperatur der durch den Kaltluftkanal 9 einströmenden Luft ist der Warmluftkanal 10 dann auf jeden Fall geschlossen, und die Brennkraftmaschine erhält nur Luft durch den Kaltluftkanal 9. Die sich durch Abschließen des Warmluftkanals 10 ergebende geringere Temperatur der Ansaugluft führt zu einem besseren Füllungsgrad der Maschine, so daß gerade im Vollastbetrieb eine bessere Leistung erzielt ist.

Unterschreitet jedoch die durch den Kaltluftkanal 9 angesaugte Luft die vorbestimmte Temperatur, so verschiebt sich der Antriebsstift 42 des Thermostats so weit in Richtung des Thermostaten, daß die Steuerklappe 11 den Warmluftkanal 10 teilweise freigibt, so daß etwas Warmluft zugemischt wird, um damit eine Temperatur einer Mischluft zu erzielen, die einen gewünschten Wert nicht unterschreitet und beispielsweise die gefürchtete Vereisung im Ansaugsystem sicher verhindert.

## Patentansprüche

1. Vorrichtung zur Regelung der Temperatur der Ansaugluft von Brennkraftmaschinen mit einer im Rohluftstutzen (8) eines Ansaugluftfilters (4) schwenkbaren Steuerklappe (11), die mit einem pneumatischen Stellglied (15) zusammenwirkt, wobei das Stellglied durch insbesondere einen Bimetallregler (27) in Abhängigkeit von der der Verbrennungsmaschine zugeführten Lufttemperatur eine Verstellung der Steuerklappe (11) bewirkt, wobei weiterhin ein der Kaltluft ausgesetzter Thermostat (40) vorgesehen ist, der über einen bewegbaren Anschlag den Schwenkbereich der Steuerklappe in der den Warmluftkanal abschließenden Richtung festlegt, dadurch gekennzeichnet, daß der Thermostat (40) in einer Aufnahmevorrichtung (41) angeordnet ist und diese Aufnahmevorrichtung mittels einer Schweißverbindung in dem Kaltluftkanal (9) befestigt ist, wobei eine Längsverschiebung der Aufnahmevorrichtung (41) für den Thermostat (40) zur Justage des Thermostaten in Bezug auf die Stellung der Steuerklappe (11) vor dem Verschweißen der Aufnahmevorrichtung (41) erfolgt.

2. Vorrichtung nach Anspruch 1, dadurch gekennzeichnet, daß die Aufnahmevorrichtung mittels Ultraschallschweißen oder Reibschweißen in dem Kaltluftkanal (9) befestigt ist.

3. Vorrichtung nach einem der vorherigen Ansprüche, dadurch gekennzeichnet, daß sich der Thermostat (40) entlang der Strömungsrichtung der angesaugten Luft erstreckt.

4. Vorrichtung nach Anspruch 1, dadurch gekennzeichnet, daß das Stellglied mittels eines Doppelreglers oder eines Drosselreglers in Abhängigkeit von der zugeführten Lufttemperatur eine Verstellung der Steuerklappe verursacht.

5. Verfahren zum Schweißen der Vorrichtung gemäß Anspruch 1, dadurch gekennzeichnet, daß das Gehäuse der Vorrichtung in eine Schweißaufnahme fixierbar ist und die Aufnahmevorrichtung (41) mit dem Thermostat (40) in einem in Bezug auf den Drehpunkt der Steuerklappe (11) verschiebbar angeordneten Schweißhalter befestigt ist und mittels des Schweißhalters eine Justierung durchführbar ist.

## Claims

1. Apparatus for regulating the temperature of the intake air of internal combustion engines, including a control flap (11), which is pivotable in the unfiltered air conduit (8) of an air inlet filter (4) and co-operates with a pneumatic setting member (15), the setting member effecting an adjustment of the control flap (11), more especially by means of a bimetallic regulator (27), in dependence on the air temperature supplied to the internal combustion engine, a thermostat (40) also being provided, which is exposed to the cold air and determines the pivotal range of the control flap in the direction terminating the hot air duct via a displaceable stop member, characterised in that the thermostat (40) is disposed in a receptacle (41), and this receptacle is mounted in the cold air duct (9) by means of a welded joint, a longitudinal displacement of the receptacle (41) for the thermostat (40) being effected prior to the welding of the receptacle (41) in order to adjust the thermostat relative to the position of the cotrol flap (11).

2. Apparatus according to claim 1, characterised in that the receptacle is mounted in the cold air duct (9) by means of ultrasonic welding or friction welding.

3. Apparatus according to one of the preceding claims, characterised in that the thermostat (40) extends along the direction of flow of the drawn-in air.

4. Apparatus according to claim 1, characterised in that the setting member causes an adjustment of the control flap by means of a double-type regulator or a throttle-type regulator in dependence on the supplied air temperature.

5. Method of welding the apparatus according to claim 1, characterised in that the housing of the apparatus is securable in a welding receiving means, and the receptable (41) is mounted with the thermostat (40) in a welding holder, which is disposed in a displaceable manner relative to the pivot point of the control flap (11), and an adjustment can be effected by means of the welding holder.

## Revendications

1. Dispositif de régulation de la température de l'air aspiré par un moteur à combustion interne, dans lequel :
- un volet de commande (11) est monté basculant à l'intérieur de la tubulure (8) alimentant le filtre d'air aspiré (4), et coopère avec un organe pneumatique de réglage (15) qui déplace le volet de commande (11) par l'intermédiaire notamment d'un régulateur à bilame (27), en fonction de la température de l'air alimentant le moteur,
- il est prévu de plus un thermostat (40) exposé à l'air froid et qui détermine par une butée mobile la plage de basculement du volet de commande, dans le sens de fermeture du canal d'air chaud,
dispositif caractérisé en ce que
le thermostat (40) est monté dans un réceptacle (41) du thermostat (40), et ce réceptacle (41) est fixé par soudure au canal d'air froid (9) tandis que le déplacement longitudinal du réceptacle (41) pour le thermostat (40) est effectué pour ajuster la position de celui-ci en fonction de celle du volet de commande (11) avant l'opération de soudure du réceptacle (41).

2. Dispositif selon la revendication 1,
caractérisé en ce que
le réceptacle (41) est fixé au canal d'air froid (9), par ultrasons ou par friction.

3. Dispositif selon une des revendications précédentes,
caractérisé en ce que
le thermostat (40) s'étend selon la direction du courant d'air aspiré.

4. Dispositif selon la revendication 1,
caractérisé en ce que
l'organe de réglage provoque un déplacement du volet de réglage en fonction de la température de l'air entrant, au moyen d'un régulateur double ou d'un régulateur à étranglement.

5. Procédé pour souder le dispositif de la revendication 1,
caractérisé en ce que
le boîtier du dispositif peut être fixé dans un logement soudé et que le réceptacle (41) avec son thermostat (40) est fixé sur un support soudé pouvant se déplacer par rapport au point de rotation du volet de commande (11) et permet donc de procéder à un ajustage.
